Europäisches Patentamt

European Patent Office

Office européen des brevets

(11) Veröffentlichungsnummer: **0 187 888**
**B1**

(12) # EUROPÄISCHE PATENTSCHRIFT

(45) Veröffentlichungstag der Patentschrift:
09.12.87

(21) Anmeldenummer: 85100529.8

(22) Anmeldetag: 18.01.85

(51) Int. Cl.⁴: **F 16 F 9/00,** F 16 F 1/36,
B 29 C 33/00 // B29K7:00

(54) **Federkörper und Verfahren zu seiner Herstellung.**

(43) Veröffentlichungstag der Anmeldung:
23.07.86 Patentblatt 86/30

(45) Bekanntmachung des Hinweises auf die Patenterteilung:
09.12.87 Patentblatt 87/50

(84) Benannte Vertragsstaaten:
AT BE CH DE FR GB IT LI LU NL SE

(56) Entgegenhaltungen:
EP - A - 0 110 233
DE - A - 2 516 539
DE - A - 3 017 379
DE - C - 475 849
FR - A - 1 348 702
FR - A - 2 298 737
GB - A - 1 370 185
US - A - 2 295 363
US - A - 3 209 380
US - A - 3 543 337

PATENTS ABSTRACTS OF JAPAN, Band 1, Nr. 96, 30.
August 1977, Seite 2642 M 77; & JP - A - 52 37 675
(SHIGEYA KAWAMATA) 23.03.1977

(73) Patentinhaber: WOCO Franz-Josef Wolf & Co.,
Sprudelallee 19, D-6483 Bad Soden-Salmünster (DE)

(72) Erfinder: Wolf, Franz-Josef, Sprudelallee 19, D-6483 Bad
Soden-Salmünster (DE)
Erfinder: Pletsch, Hubert, Am Quellenrain 13,
D-6483 Bad Soden-Salmünster (DE)
Erfinder: Benneyan, Gregoire, Huttenheegstrasse 2,
D-6483 Bad Soden-Salmünster (DE)

(74) Vertreter: Jaeger, Klaus, Dipl.-Chem. Dr. et al, JAEGER
& PARTNER Patentanwälte Pippinplatz 4a,
D-8035 Gauting (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Ein Dämpferkörper, der die Merkmale des im Oberbegriff des Patentanspruchs 1 genannten Federkörpers aufweist, ist aus der Japanischen Offenlegungsschrift JP-A-52 37 675 bekannt. In bandförmigem, plattenförmigem oder kugelförmigem Elastomermaterial sind zylindrische oder kugelförmige Hohlräume regelmässig verteilt angeordnet und untereinander in einem nach aussen hermetisch abgeschlossenen und mit Dämpfungsfluid gefülltem System durch dünne Drosselkanäle miteinander verbunden. Bei kugelförmiger Ausbildung weist ein solcher Dämpferkörper in einer Elastomermatrix kugelförmige entspricht. Die so angeordneten Hohlräume sind untereinander durch dünne Kanäle miteinander verbunden. Das aus Hohlräumen und Kanälen gebildete Netz im Inneren der Elastomermatrix ist mit einer Dämpfungsflüssigkeit gefüllt. Beim Einwirken eines Stossimpulses auf diesen Dämpferkörper werden die Hohlräume im Auftreffbereich zusammengedrückt. Die in diesen Hohlräumen enthaltene Dämpfungsflüssigkeit wird dadurch mit hoher kinetischer Energie in die einmündenden Drosselkanäle und über diese in die benachbarten Hohlräume gepumpt. Dadurch wird eine gute Dämpfungswirkung erzielt. Nach Aufhebung der Krafteinwirkung auf die zusammengedrückten Hohlräume wird die aus diesen verdrängte Dämpfungsflüssigkeit durch Rückstellen der gedehnten benachbarten Hohlräume wieder in den sich dadurch rückstellenden Ausgangshohlraum rückgeführt.

Ein solcher Dämpferkörper, solange er keine Dämpfungsflüssigkeit enthält, ähnelt in seinem Federverhalten, insbesondere seinem Langzeitverhalten, den elastomeren Schaumstoffen und ist daher zum langfristigen, insbesondere dynamischen Lagern von Aggregaten und Maschinen ungeeignet.

Angesichts dieses Standes der Technik liegt der Erfindung die Aufgabe zugrunde, einen Federkörper der eingangs genannten Art aus elastischem Werkstoff zu schaffen, der einerseits mechanisch so widerstandfähig, fest und formstabil ist, dass er auch grössere Lasten unbeschadet und bestimmungsgemäss federnd aufnehmen kann, dabei jedoch andererseits gleichzeitig eine ausgesprochen weiche Federcharakteristik mit weitem Proportionalitätsbereich bei verbesserter akustischer Dämpfung aufweist.

Der Erfindung liegt weiterhin die Aufgabe zugrunde, ein wirtschaftliches Verfahren zur industriellen Herstellung eines solchen Federkörpers zu schaffen.

Zur Lösung dieser Aufgabe weist ein Ferderkörper der eingangs genannten Art die im kennzeichnenden Teil des Anspruchs 1 genannten Merkmale auf. Er wird dabei vorzugsweise nach dem im Anspruch 6 genannten Verfahren hergestellt.

Ausgestaltungen der Erindung sind Gegenstand der Unteransprüche und dort gekennzeichnet.

Durch die erfindungsgemässe Anordnung der die Hohlräume durchsetzenden Kanäle und damit auch der Hohlräume selbst in mehreren sich in verschiedenen Ebenen des Raumes kreuzenden, aber nicht schneidenden Scharen in jeder Schar jeweils zueinander parallelen Kanäle wird vermieden, dass im Elastomerkörper Materialstege oder Materialstränge oder Materialbrücken anderer Art stehenbleiben, wodurch sowohl die benötigte Weichheit der Federkennlinie als auch die akustische Dämpfung, die im wesentlichen auf Streueffekte an den Hohlräumen zurückzuführen ist, erhalten wird, ohne dabei den Federkörper selbst mechanisch zu schwächen und ohne einen negativen Verlauf der Federkennlinie durch Knickeffekte in Kauf nehmen zu müssen.

Die den elastischen Block des Federkörpers durchsetzenden Kanäle sind vorzugsweise in Form von zwei Kanalscharen ausgebildet, die jeweils untereinander räumlich mit gleichem Abstand voneinander und den gesamten Block durchsetzend parallel zueinander angeordnet sind. Dabei sind die beiden Kanalscharen senkrecht einander kreuzend angeordnet, jedoch in unterschiedlichen Ebenen so, dass sie einander ohne sich zu schneiden durchsetzen. Jeder der Kanäle durchsetzt zentrisch mehrere, vorzugsweise kugelförmige Hohlräume, die, bezogen auf die Kanalachse, mit einem solchen gleichen Abstand voneinander angeordnet sind, dass sämtliche im Elastomerblock vorliegenden Hohlräume beider Kanalscharen gemeinsam ein kubisch raumzentriertes Gitter bilden. Dabei sind die Kanalscharen so angeordnet, dass die Hohlräume jeweils einer der Kanalscharen eines der beiden kubisch primitiven Teilgitter bilden, aus denen sich insgesamt das kubische raumzentrierte Gitter zusammensetzt. Bei einem solcherart ausgestalteten Federkörper wird eine optimale Spannungsverteilung bei Auflasteinwirkung über den gesamten Federkörper erzielt, so dass der Federkörper eine ausserordentlich flach verlaufende Federkennlinie mit weitem Proportionalitätsbereich aufweist. Ein solcherart gestalteter Federkörper ist dabei im Vergleich zu den bekannten Federkörpern nicht nur in seinem Federverhalten weicher, sondern diesen bekannten Federkörpern hinsichtlich seiner Standzeit aufgrund der geringeren Materialbelastung weit überlegen. Zudem wird im Vergleich zu bekannten Federkörpern mit gleichem Verlauf der Federkennlinie eine wesentlich grössere Stabilisierung gegenüber Schubkräften erzielt, die neben der hauptsächlichen Druckbelastung auftreten können.

Ausserdem wird mit dem Federkörper durch Streueffekte in den Hohlkörpern eine unerwartet gute Körperschallisolation erzielt.

Eine optimale Wirkung des Federelements wird erzielt, wenn das Federelement von mehreren jeweils zueinander ebenenparallelen Kanalscharen jeweils untereinander paralleler Kanäle durchsetzt ist, von denen jede einzelne Schar von Känalen eine Ebene definiert und die auf das Federelement im Sinne einer Kompression einwirkende Nutzlast zumindest im wesentlichen senkrecht zu den Ebenen der Kanalscharen einwirkt. Dabei sind die einzelnen Kanalscharen bezüglich ihrer Kanalachsen einander kreuzend, aber, wie bereits vorstehend ertwähnt, sich nicht schneidend ausgerichtet. Insbesondere hat sich eine Ausrichtung der Kanalachsen von einer zur nächstfolgenden Ebene von Kanalscharen in der Weise als vorteilhaft erwiesen, dass, in Richtung der Stapelung gesehen, die Achsen der Kanäle der einzelnen Kanalscharenebenen jeweils gleichsinnig um den gleichen Winkelbetrag gegeneinander verdreht sind, also eine schraubenartig fortschreitende Konfiguration bilden. Im Hinblick auf die Schalldämpfung erbringt diese Anordnung den wesentlichen Vorteil, dass in Richtung senkrecht zu den Kanalscharenebenen, also in Richtung der bevorzugten Lasteinwirkung, praktisch keine durchgehenden Stege als akustische Kurzschlusskanäle stehenbleiben, die sich als Körperschallbrücke auswirken.

Der Federkörper gemäss der Erfindung wird vorzugsweise in der Weise hergestellt, dass in einem Formwerkzeug ein Formnest ausgebildet wird, das der Aussenkontur des herzustellenden Federkörpers entspricht. Dieses Formnest ist mit Formkernen bzw. Formkernscharen durchsetzt, die zumindest im wesentlichen stabförmig ausgebildet sind und in regelmässigen Abständen Verdickungen aufweisen, deren Aussenkontur der Innenkontur der Hohlräume entspricht. Die Formkerne können unverlierbar aus Stahl ausgebildet sein oder können aus Kunststoff als verlierbare Formkerne ausgebildet werden.

Das mit den Formkernscharen bestückte Formwerkzeug wird dann in an sich bekannter Weise durch Pressen oder Spritzen mit der plastifizierten Elastomermasse, sei diese nun unvernetzt, vorvernetzt oder thermoplastisch erweicht, beschickt. Anschliessend wird das Elastomer durch Vernetzen oder in anderer Weise verfestigt. Der verfestigte Elastomerkörper wird mit den Formkernen entformt, d.h. aus dem Nest des Formwerkzeugs herausgenommen. Dabei kann dieses „herausnehmen" beispielsweise auch dadurch erfolgen, dass die Formwerkzeugteile entfernt werden. Aus dem dabei verbleibenden Elastomerkörper, der noch von den Formkernscharen durchsetzt ist, werden dann die Formkerne durch Ziehen zerstörungsfrei oder in anderer Weise, beispielsweise zerstörend, aus dem Elastomerkörper entfernt. Der erhaltene Federkörper kann direkt oder gegebenenfalls nach weiterem Zuschnitt unmittelbar eingesetzt werden.

Die Erfindung ist im folgenden anhand eines Ausführungsbeispiels in Verbindung mit den Zeichnungen näher erläutert. Es zeigen:

Fig. 1 in schematischer Darstellung ein Ausführungsbeispiel eines Federkörpers gemäss der Erfindung mit kubisch raumzentrierter Anordnung der Hohlräume in der Schnittebene (110);

Fig. 2 in schematischer Darstellung einen Schnitt der in Fig. 1 gezeigten Art in der Ebene (100), und

Fig. 3 in dem in den Figuren 1 und 2 dargestellten Federkörper in schematischer Darstellung die räumliche Anordnung der Kanäle und Hohlräume.

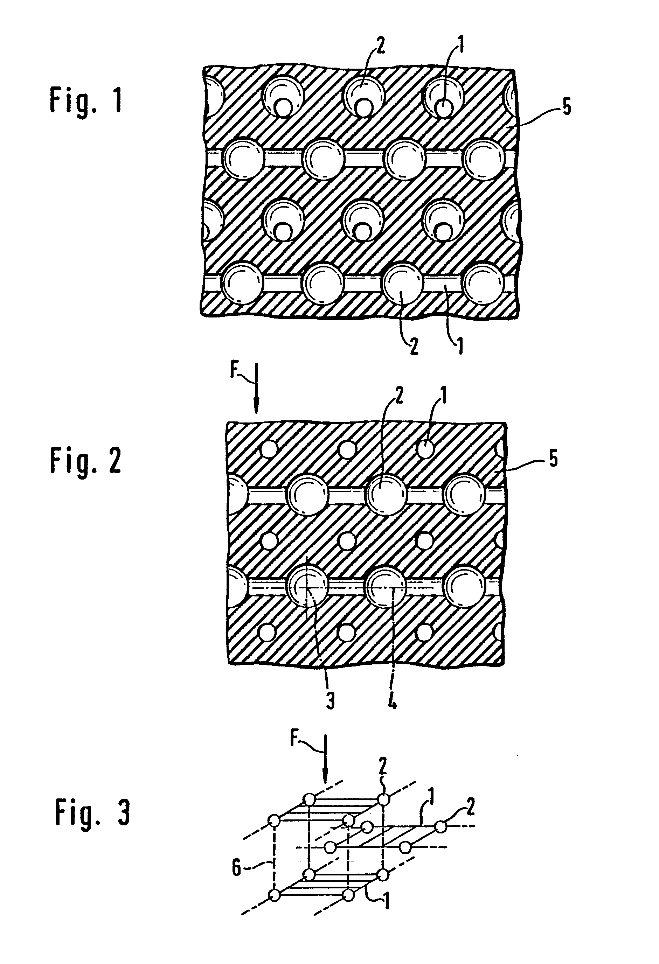

In den Figuren 1 und 2 ist in schematischer Darstellung jeweils ein Schnitt durch einen Ferderkörper gezeigt, bei dem ein Block 5 aus einem elastischen Werkstoff, hier Naturkautschuk mit einer Härte von 35 Shore A, von zwei Scharen zylindrischer Kanäle 1 durchsetzt ist. Die Scharen der zylindrischen Kanäle sind in der Ebene senkrecht zueinander, jedoch in der Richtung der Normalen zu dieser Ebene so gegeneinander versetzt angeordnet, dass sich die Kanäle nicht schneiden. Die Kanäle jeder Schar verlaufen jeweils parallel zueinander und sind zumindest im wesentlichen über das gesamte Volumen des Blocks 5 mit gleichem räumlichen Abstand voneinander verteilt angeordnet. Jeder der Kanäle 1 durchsetzt mehrere kugelförmige Hohlräume 2, deren Durchmesser grösser als der Durchmesser des Kanals 1 ist. Die kugelförmigen Hohlräume 2 und die Kanäle 1 sind dabei jeweils so zueinander angeordnet, dass die Mittelachse 4 der zylindrischen Kanäle 1 durch die Mittelpunkte 3 der kugelförmigen Hohlräume 2 verläuft. Bezogen auf die Achse 4 jedes Kanals 1 sind die kugelförmigen Hohlräume 2 äquidistant voneinander angeordnet. Dabei ist in dem hier gezeigten Ausführungsbeispiel der Abstand zweier benachbarter kugelförmiger Hohlräume voneinander, die von ein und demselben zylindrischen Kanal durchsetzt werden, gleich dem Abstand zweier benachbarter zueinander paralleler Kanäle 1 derselben Schar von Kanälen. Mit anderen Worten, die kugelförmigen Hohlräume jeder Kanalschar bilden untereinander ein kubisch primitives Teilgitter, wobei die beiden Teilgitter jeder der beiden Scharen so gegegeneinander versetzt und ineinander verschränkt sind, dass sämtliche im Block 5 verteilten kugelförmigen Hohlräume 2 untereinander ein kubisch raumzentriertes Gitter bilden. Ausgedrückt in den in der Cristallographie gebräuchlichen Schreibweise der Miller'schen Indices zeigt die Fig. 1 die Schnittebene (110) und die Fig. 2 die Schnittebene (100) dieses kubisch raumzentrierten Gitters der Hohlräume 2 im Block 5 des Federkörpers. Die Fig. 1 zeigt also einen Schnitt in Richtung der senkrecht zu einer Grundfläche des Gitterwürfels stehenden Diagonalfläche, während der in Fig. 2 gezeigte Schnitt eine Seitensicht auf die Gitterzelle darstellt.

In Fig. 3 ist in schematischer räumlicher Darstellung im Ausschnitt noch einmal die räumliche Anordnung der beiden sich durchdringenden Scharen von Kanälen 1 mit den Hohlräumen 2 gezeigt, wobei die Elementarzelle 6 des kubisch raumzentrierten Gitters der Hohlräume 2 angedeutet ist.

Die bevorzugte Richtung der bestimmungsgemäss zu federnden Nutzlasteinwirkung ist in den Fig. 2 und 3 durch den Pfeil F angedeutet. Diese Richtung verläuft für den in Fig. 1 gezeigten Schnitt unter 45° zur Zeichnungsebene.

## Patentansprüche

1. Federkörper aus einem mit zylindrischen oder prismatischen Kanälen durchsetzten Block aus einem elastischen Werkstoff, wobei die Kanäle (1) im Block (5) ausgebildete Hohlräume (2) durchsetzen, deren grösster lichter Querschnitt in der senkrecht zur Kanalachse liegenden Ebene grösser als der Querschnitt der Kanäle in dieser Ebene ist, und senkrecht und parallel zur Kanalachse (4) ein Achsenverhältnis im Bereich von 1:3 bis 3:1, insbesondere von zumindest ungefähr 1:1, aufweisen, und wobei die Kanäle (1) die Hohlräume (2) so durchsetzen, dass die Mittelpunkte (3) der Hohlräume auf der Achse (4) der Kanäle liegen, und alle von einem Kanal durchsetzten Hohlräume einen gleichen Abstand voneinander haben, dadurch gekennzeichnet, dass der Block (5) von mindestens zwei, sich räumlich überkreuzenden, aber nicht schneidenden Scharen von Kanälen (1) durchsetzt ist, die in der Projektion auf die Radialebene einen gleichen Winkelabstand voneinander aufweise.

2. Federkörper nach Anspruch 1, dadurch gekennzeichnet, dass der Block (5) von zwei, sich räumlich in verschiedenen Ebenen zumindest im wesentlichen rechtwinklig überkreuzenden, aber nicht schneidenden Scharen untereinander paralleler, räumlich gleichmässig verteilter Kanäle (1) durchsetzt ist.

3. Federkörper nach einem der Ansprüche 1 oder 2, dadurch gekennzeichnet, dass die Hohlräume (2) im Block (5) ein kubisch raumzentriertes Gitter bilden (Fig. 1 bis 3).

4. Federkörper nach einem der Ansprüche 1 bis 3, dadurch gekennzeichnet, dass die Kanäle (1) und Hohlräume (2) mit einer Dämpfungsflüssigkeit gefüllt sind.

5. Federkörper nach einem der Ansprüche 1 bis 4, dadurch gekennzeichnet, dass die Kanäle (2) zumindest einseitig offen sind.

6. Verfahren zur Herstellung eines Federkörpers nach einem der Ansprüche 1 bis 5, dadurch gekennzeichnet, dass in ein der Aussenkontur des herzustellenden Federkörpers entsprechendes Formnest eines Formwerkzeuges, das mit in regelmässigen Abständen Verdickungen aufweisenden stabförmigen Formkernscharen durchsetzt ist, eine unvernetzte oder nur vorvernetzte plastifizierte Elastomermischung eingepresst oder eingespritzt wird, dass diese Elastomermischung dann im Formwerkzeug zumindest bis zu Formbeständigkeit vernetzt oder anderweitig verfestigt wird, dass der Elastomerformkörper dann mit den Formkernen aus dem Formwerkzeug entformt wird und dass schliesslich die Formkerne einzeln oder scharenweise aus dem Elastomerformkörper herausgezogen oder anderweitig entfernt werden, wobei der einsatzfertige Federkörper erhalten wird.

## Claims

1. A spring element consisting of a block made of a resilient elastomere material interspersed with cylindrical or prismatic channels, which channels (1) intersperse cavities (2) formed in the block (5), the greatest inside cross-section of which cavities in the plain located at right angles to the channel axis is greater than the cross-section of the channels in that plain, and which cavities (2) further exhibit at right angles and parallel to the channel axis (4) an axis ratio in the range from 1:3 to 3:1, particularly of at least approximately 1:1, the channels (1) interspersing the cavities (2) so that the centers (3) of the cavities lie upon the axis (4) of the channels and all the cavities interspersed by one respective channel mutually are spaced at equidistant intervals, wherein the block (5) is interspersed by at least two sets of mutually parallel channels (1) which cross each other three-dimensionally in different plains and do not intersect, and which exhibit an equal mutual angular interval from section to section in projection onto the radial plain.

2. A spring element according to claim 1, wherein the block (5) is interspersed by two sets of mutually parallel channels (1) distributed uniformly in space, the sets crossing each other at least substantially at right angles in space, but do not intersect.

3. A spring element according to one of the claims 1 or 2, wherein the cavities (2) form a body-centered cubic lattice in the block (5) (figs. 1 to 3).

4. A spring element according to one of the claims 1 to 3, wherein the channels (1) and cavities (2) are filled with a damping fluid.

5. A spring element according to one of the claims 1 to 4, wherein the channels (2) are open at least on one end.

6. A method for producing a spring element according to one of the claims 1 to 5, wherein an uncross-linked or only pre-cross-linked plasticised elastomere mixture is transferred or injected into a mold cavity, corresponding to the external contour of the spring element to be produced, of a mold which is interspersed with sets of rod-shaped mold cores exhibiting thickened parts at regular intervals, and this elastomere mixture is then cross-linked or otherwise cured or hardened in the cavity of the mold at least up to formal stability, and the elastomere molding is then removed from the mold together with the mold cores and the mold cores are finally extracted or otherwise removed individually or in sets from the elastomere molding, the spring element ready for use then being obtained.

## Revendications

1. Corps élastique constitué par un bloc en matériau élastique traversé par des conduits cylindriques ou prismatiques, les conduits (1) traversant des cavités (2) qui sont ménagées dans le bloc (5) et dont la plus grande section intérieure dans le plan perpendiculaire à l'axe du conduit est plus grande que la section des conduits dans ce plan et qui présentent, perpendiculairement et parallèlement à l'axe (4) du conduit, un rapport des axes de l'ordre de 1:3 à 3:1, notamment de 1:1 environ et les conduits (1) traversant les cavités (2) de telle manière que les milieux (3) des cavités se trouvent sur l'axe (4) des conduits et que toutes les cavités traversées par un conduit sont à la même distance les unes des autres, caractérisé en ce que le bloc (5) est traversé par au moins deux groupes de conduits (1) qui se croisent dans l'espace, mais ne se coupent pas et dont les projections sur le plan radial font toujours le même angle entre elles.

2. Corps élastique selon la revendication 1, caractérisé en ce que le bloc (5) est traversé par deux groupes de conduits (1), parallèles les uns aux autres et uniformément répartis dans l'espace, qui se croisent à angle droit dans différents plans de l'espace, mais ne se coupent pas.

3. Corps élastique selon l'une des revendications 1 ou 2, caractérisé en ce que les cavités (2) dans le bloc (5) constituent un système cubique centré (figures 1 à 3).

4. Corps élastique selon l'une des revendications 1 à 3, caractérisé en ce que les conduits (1) et les cavités (2) sont remplis par un liquide amortisseur.

5. Corps élastique selon l'une des revendications 1 à 4, caractérisé en ce que les conduits (2) sont ouverts au moins d'un côté.

6. Procédé de fabrication d'un corps élastique selon l'une des revendications 1 à 5, caractérisé en ce que dans la cavité d'un moule dont la forme correspond au contour extérieur du corps élastique à fabriquer et qui contient des groupes de noyaux de moulage en forme de barres comportant des parties épaissies, régulièrement espacées, un mélange élastomère plastifié réticulé ou simplement pré-réticulé est introduit par pression ou par pulvérisation, en ce qu'ensuite ce mélange élastomère est, dans le moule, réticulé ou rendu plus solide par un autre procédé, jusqu'à ce que sa forme soit stable, en ce qu'ensuite le corps élastomère est extrait du moule avec les noyaux de moulage et en ce qu'enfin, les noyaux de moulage sont extraits ou enlevés par un autre procédé, individuellement ou par groupe, hors du corps élastomère, ce qui donne le corps élastique prêt à l'emploi.

**Fig. 1**

**Fig. 2**

**Fig. 3**